# EUROPEAN PATENT SPECIFICATION

(11) **EP 0 435 627 B1**
(45) Date of publication and mention of the grant of the patent: **31.07.1996**
(21) Application number: 90314182.8
(22) Date of filing: 21.12.1990
(51) Int. Cl.: C08F 4/642, C08F 10/00

(54) **Supported olefin polymerization catalyst**
Katalysator auf Träger für Olefinpolymerisation
Catalyseur supporté pour polymérisation d'oléfines

(30) Priority: 26.12.1989 US 456905
(43) Date of publication of application: 03.07.1991
(73) Proprietor: MOBIL OIL CORPORATION, Fairfax, Virginia 22037-0001 (US)
(72) Inventor: Haggerty, Robert Olds, Metuchen, New Jersey 08840 (US); Husby, Per Kristian, Somerset, New Jersey 08873 (US); Kissin, Yuri Viktorovich, East Brunswick, New Jersey 08816 (US); Nowlin, Thomas Edward, Somerset, New Jersey 08873 (US)
(74) Representative: Colmer, Stephen Gary

(56) References cited:
- EP-A- 0 435 557
- US-A- 4 849 389
- MACROMOLECULES. vol. 15, no. 3, 1982, EASTON US pages 831 - 834; A.ZAMBELLI: 'ISOTACTIC POLYMERIZATION OF PROPENE: STEREOREGULARITYOF THE INSERTION OF THE FIRST MONOMER UNIT AS A FINGERPRINT OFCATALYTIC ACTIVE SITE'

## Description

Reference is made to related application EP-A-435557.

The present invention relates to supported olefin polymerization catalyst and to a method for polymerizing olefins, particularly alpha-olefins, using such a catalyst, and to a method of making such a catalyst. In particular, the present invention relates to a catalyst, and a method for preparation thereof, which produces linear low density polyethylene (LLDPE) having a substantially improved compositional homogeneity. The polymers produced with the catalyst in the process of this invention are suitable for film and injection molding applications.

Linear low density polyethylene polymers possess properties which distinguish them from other polyethylene polymers, such as homopolymers of polyethylene. Certain of these properties are described in US-A-4,076,698.

US-A-4,302,566, describes a process for producing linear low density polyethylene polymers in a gas phase, fluid bed reactor.

US-A-4,173,547, US-A-3,787,384, US-A-4,148,754, and US-A-4,063,009, each describe various polymerization processes suitable for producing forms of polyethylene other than linear low density polyethylene.

US-A-4,173,547, describes a supported catalyst obtained by treating a support with both an organoaluminum compound and an organomagnesium compound followed by contacting the treated support with a tetravalent titanium compound.

US-A-3,787,384, and US-A-4,148,754, describe a catalyst prepared by first reacting a support (e.g., silica containing reactive hydroxyl groups) with an organomagnesium compound (e.g., a Grignard reagent) and then combining the support with a tetravalent titanium compound. According to the teachings of both of these patents, no unreacted organomagnesium compound is present when the reacted support is contacted with the tetravalent titanium compound.

US-A-4,063,009, describes a catalyst which is the reaction product of an organomagnesium compound (e.g., an alkylmagnesium halide) with a tetravalent titanium compound. The reaction of the organomagnesium compound with the tetravalent titanium compound takes place in the absence of a support material.

US-A-4,481,301, discloses a supported alpha-olefin polymerization catalyst composition prepared by reacting a support containing OH groups with a stoichiometric excess of an organomagnesium composition, with respect to the OH groups content, and then reacting the product with a tetravalent titanium compound.

US-A-4,378,304 and US-A-4,458,058, disclose an olefin polymerization catalyst composition synthesized by sequentially reacting: (1) a porous support with a Group IIA organometallic compound, e.g., a dialkylmagnesium; (2) the product of (1) with water or a hydrocarbyl alcohol, e.g., methanol; (3) the product of (2) with a transition metal compound or compounds. The product of the synthesis reaction is activated with a co-catalyst which is a Group IA, IIa, IIIA and/or IIB organometallic compound, including hydrogen. Suitable co-catalysts are n-butylithium, diethylmagnesium, triisobutylaluminum and diethylaluminum chloride.

US-A-4,558,024, US-A-4,558,025 US-A-4,579,835, disclose olefin polymerization catalyst compositions prepared by reacting together a porous particulate material, an organic magnesium compound, an oxygen-containing compound, a transition metal compound, e.g., a titanium compound (US-A-4558024) or a vanadium compound (US-A-4579835), and a co-catalyst. Some of the catalyst compositions of Best also include an acyl halide (US-A-4579835, US-A-4558025) and/or a Group IIIA hydrocarbon halides, such as boron and aluminum dihalides (US-A-4558025).

US-A-4,849,389 and US-A-4,833,111, disclose catalyst compositions for polymerizing alpha-olefins which are very active and exhibit very good higher alpha-olefins (C₃-C₁₀) incorporation properties. The catalyst of US-A-4833111 is synthesized by reacting, sequentially, a slurry of a solid catalyst carrier, e.g., silica, with a dialkyl organomagnesium composition, a hydroxyl group containing compound, e.g., an alcohol, and at least one transition metal compound. The non-polar solvent is removed to produce a dry-flowing powder, which is activated with trimethylaluminum. The catalyst of US-A-4833111 is synthesized in a manner similar to that of US-A-4849389, except that a halogenated alkyl aluminum compound, e.g., ethyl aluminum dichloride, is used in the synthesis after the slurry is reacted with the transition metal compound.

It is known to those skilled in the art that the olefin copolymers, e.g., ethylene/C₃-C₁₀ copolymers produced with Ziegler-Natta catalysts, including prior art catalysts, have a relatively broad distribution of side branches. If such copolymers are subject to fractionation, different fractions have widely different levels of branching, indicating that different fractions of the copolymers have different compositions, i.e., they contain varying amounts of ethylene and higher comonomers. US-A-3,645,992, teaches that this broad branching distribution (also referred to by Elston as heterogeneity of the copolymers) is detrimental to the mechanical properties of the copolymers. It is therefore desirable to produce copolymers having improved, more narrow branching distribution of side branches.

According to US-A-3645992, the measurement of the crystalline melting points and the higher comonomer contents for various ethylene-higher olefin copolymers is an indication of homogeneity of the copolymer.

It is an object of the present invention to provide a catalyst for the polymerization of olefins, e.g., alpha-olefins, capable of producing polymers having a substantially improved distribution of branches among the polymer molecules.

A supported alpha-olefin polymerization catalyst composition of this invention, also referred to herein as a catalyst precursor, is prepared in a method comprising several steps. In the first step, a mixture of a solid, porous carrier and a non-polar solvent is contacted with at least one organomagnesium composition of the formula

RₘMgR'ₙ (I)

where R and R' are the same or different C₄-C₁₂ alkyl groups, m and n are each 0, 1 or 2, providing that m + n equals the valence of Mg. Subsequently, the mixture of the first step is contacted with at least one compound of formula

R"-OH (II)

where R" is a C₁-C₁₀ alkyl or a C₁-C₁₀ halogenated alkyl group. The resulting mixture is then contacted with at least one transition metal compound soluble in the non-polar solvent.

The product of the above steps may be dried and it is activated with dimethylaluminum chloride, a catalyst activator. The resulting activated catalyst composition has high productivity in the polymerization of olefins, particularly alpha-olefins, good higher comonomer (i.e., C₃-C₁₀ alpha-olefin) incorporation properties, and it produces polymers having a substantially improved homogeneity of distribution of branches among the polymer molecules.

The invention is also directed to a supported catalyst composition comprising at least one organomagnesium composition of the formula

RₘMgR'ₙ (I)

where R, and R', m and n are the same as defined above, at least one compound of the formula

R"-OH (II)

where R" is also the same as defined above, at least one transition metal compound, and dimethylaluminum chloride.

The invention also provides a method of polymerizing at least one olefin, which comprises contacting the olefin under olefin polymerization conditions with a catalyst according to the invention.

Further features of the invention are defined in the dependent claims.

Reference is now made to the accompanying drawing which is a graphical representation of the relationship of a crystalline melting point as a function of the 1-hexene content for: (1) the polymers made with the catalyst of Karol et al, EP-A-0 120 503 (the upper curve); (2) a polymer of very narrow branching distribution (the lower curve); and (3) the polymers made with the Example 1 precursor activated with various activators (individual data points).

The polymers prepared in the presence of the catalyst compositions of this invention are linear polyethylenes which are homopolymers of ethylene or copolymers of ethylene and higher alpha-olefins. The polymers have relatively low values of crystalline melting points, thereby indicating a substantially improved homogeneity of distribution of branches among the polymer molecules, as compared to similar polymers prepared in the presence of previously-known catalyst compositions, e.g., those disclosed by US-A-4,849,389. Thus, the polymers prepared with the catalyst compositions of this invention are especially suitable for the production of high strength films and injection molding applications.

Catalysts produced according to the present invention are described below in terms of the manner in which they are made.

### Catalyst Synthesis

The carrier materials are usually inorganic, solid, particulate porous materials which are inert to the other components of the catalyst composition and to the other active components of the reaction system. These carrier materials include such inorganic materials as oxides of silicon and/or aluminum. The carrier materials may be used in the form of dry powders having an average particle size of from 1 micron (1 micron = 1 µm) to about 250 microns, preferably from 10 microns to about 150 microns. The carrier materials are also porous and may have a surface area of at least 3 square meters per gram, and preferably at least 50 square meters per gram. The carrier material should preferably be dry, that is, free of absorbed water. Drying of the carrier material can be effected by heating at 100 to 1000°C and preferably at 600°C. When the carrier is silica, it is normally heated at a temperature of at least 200°C, preferably at 200 to 850°C, and most preferably at 600°C. The carrier material preferably has at least some active hydroxyl (OH) groups to produce the catalyst composition of this invention.

In the most preferred embodiment, the carrier is silica which, prior to the use thereof in the first catalyst synthesis step, has been dehydrated by fluidizing with nitrogen and heating at 600°C for about 16 hours to achieve a surface hydroxyl concentration of about 0.7 mmols/g. The silica of the most preferred embodiment is a high surface area, amorphous silica (surface area = 300 m²/g; pore volume of 1.65 cm³/g), and it is a material marketed under the tradenames of Davison 952 (trade mark) or Davison 955 (trade mark) by the Davison Chemical Division of W.R. Grace and Company. The silica is in the form of spherical particles, e.g., as obtained by a spray-drying process. The carrier material is slurried in a non-polar solvent and the resulting slurry is contacted with at least one organomagnesium composition having the empirical formula (I). The slurry of the carrier material in the solvent is prepared by introducing the carrier material into the solvent, preferably while stirring, and preferably heating the mixture to 25 to 100°C, more preferably 40 to 60°C. The slurry is then contacted with the aforementioned organomagnesium composition, preferably while the heating is continued at the aforementioned temperature.

The organomagnesium composition has the empirical formula Rₘ Mg R'ₙ, where R and R' are the same or different C₄-C₁₂ alkyl groups, preferably C₄-C₁₀ alkyl groups, more preferably C₄-C₈ unsubstituted alkyl groups, and most preferably both R and R' are n-butyl groups; and m and n are each 0, 1 or 2, providing that m + n is equal to the valence of Mg.

Suitable non-polar solvents are materials in wich all of the reactants used herein, i.e., the organomagnesium composition, the compound(s) of formula (II), the transition metal compounds and the halogenated alkyl aluminum compounds are at least partially soluble and which are liquid at reaction temperatures. Preferred non-polar solvents are alkanes, such as hexane, n-heptane, octane, nonane, and decane, although a variety of other materials including cycloalkanes, such as cyclohexane, aromatics, such as benzene and ethylbenzene, can be employed. The most preferred non-polar solvent is hexane. Prior to use, the non-polar solvent should be purified, such as by percolation through silica gel and/or molecular sieves, to remove traces of water, oxygen, polar compounds, and other materials capable of adversely affecting catalyst activity.

In the most preferred embodiment of the synthesis of this catalyst it is important to add only such an amount of the organomagnesium composition that will be deposited - physically or chemically - onto the support since any excess of the organomagnesium composition in the solution may react with other synthesis chemicals, e.g., the compound of formula (II), and precipitate outside of the support, which is detrimental in the synthesis of the catalyst and should be avoided. The carrier drying temperature affects the number of sites on the carrier available for the organomagnesium composition - the higher the drying temperature the lower the number of sites. Thus, the exact molar ratio of the organomagnesium composition to the hydroxyl groups will vary and must be determined on a case-by-case basis to assure that only such an amount of the organomagnesium composition is added to the solution which will be deposited onto the support without leaving any excess of the organomagnesium composition in the solution. Furthermore, it is believed that the molar amount of the organomagnesium composition deposited onto the support is greater than the molar content of the hydroxyl groups on the support. Thus, the molar ratios given below are intended to serve only as an approximate guideline and the exact amount of the organomagnesium composition in this embodiment must be controlled by the functional limitation discussed above, i.e., it must not be greater than that which can be deposited onto the support. The amount of the organomagnesium composition which is not greater than that deposited onto the support can be determined in any conventional manner, e.g., by adding the organomagnesium composition to the slurry of the carrier in the solvent, while stirring the slurry, until the organomagnesium composition is detected as a solution in the solvent.

For example, for the silica carrier heated at 200 to 850°C, the amount of the organomagnesium composition added to the slurry is such that the molar ratio of Mg to the hydroxyl groups (OH) on the solid carrier is 1:1 to 6:1, preferably 2:1 to 4:1, more preferably 2.5:1 to 3.5:1 and most preferably 3:1, depending upon the temperature at which the carrier material was dried. The organomagnesium composition dissolves in the non-polar solvent to form a solution.

It is also possible to add such an amount of the organomagnesium composition which is in excess of that which will be deposited onto the support and then remove, e.g., by filtration and washing, any excess of the organomagnesium composition. However, this alternative is less desirable than the most preferred embodiment described above.

After the addition of the organomagnesium composition to the slurry is completed, the slurry is contacted with at least one compound of the formula (II)

R"-OH (II)

where R" is a C₁-C₁₀ alkyl group or a C₁-C₁₀ halogenated alkyl group, preferably R" is a C₁-C₁₀ alkyl group, more preferably a C₁-C₄ normal alkyl group or a C₁-C₄ halogenated normal alkyl group, and most preferably R" is an ethyl group. Thus, the compound of formula (II) is preferably an alcohol and most preferably ethanol. The amount of the compound of formula (II) used in this synthesis step is sufficient to convert substantially all of the magnesium alkyl (MgR or MgR') groups on the carrier to magnesium alkoxy (MgOR") groups. In a preferred embodiment, the amount of the formula (II) compound added is such that substantially no excess thereof is present in the non-polar solvent after substantially all of the magnesium alkyl groups are converted to the magnesium alkoxy groups on the carrier to prevent the reaction of the formula (II) compound with the transition metal compound outside of the carrier. This synthesis step may be conducted at 25 to 65°C, preferably at 30 to 55°C, and most preferably at 30 to 40°C.

After the addition of the formula (II) compound is completed, the slurry is contacted with at least one transition metal compound soluble in the non-polar solvent. This synthesis step may be conducted at 25 to 65°C, preferably at 30 to 55°C, and most preferably at 30 to 40°C. In a preferred embodiment, the amount of the transition metal compound added is not greater than that which can be deposited onto the carrier. The exact molar ratio of Mg to the transition metal and of the transition metal to the hydroxyl groups of the carrier will therefore vary (depending, e.g., on the carrier drying temperature) and must be determined on a case-by-case basis. For example, for the silica carrier heated at 200 to 850°C, the amount of the transition metal compound is such that the molar ratio of the transition metal, derived from the transition metal compound, to the hydroxyl groups of the carrier is 1:1 to 2:1, preferably about 1.5:1 to about 2:1 and the molar ratio of Mg to the transition metal is 1:1 to 3:1, preferably 2:1 to 3:1. These molar ratios produce a catalyst composition which produces resins having relatively narrow molecular weight distribution and improved branching homogeneity. As is known to those skilled in the art, such resins can be utilized to produce film or injection molding products.

Suitable transition metal compounds used herein are compounds of metals of Groups IVA, VA, VIA or VIIIA of the Periodic Table of the Elements, as published by the Sargent-Welch Scientific Company, Catalog No. 5-18806, 1979, providing that such compounds are soluble in the non-polar solvents. Nonlimiting examples of such compounds are titanium and vanadium halides, e.g., titanium tetrachloride, TiC1₄, vanadium tetrachloride, VC1₄, vanadium oxytrichloride, VOC1₃, titanium and vanadium alkoxides, wherein the alkoxide moiety has a branched or unbranched alkyl radical of 1 to 20 carbon atoms, preferably 1 to 6 carbon atoms. The preferred transition metal compounds are titanium compounds, preferably tetravalent titanium compounds. The most preferred titanium compound is titanium tetrachloride. Mixtures of such transition metal compounds may also be used and generally no restrictions are imposed on the transition metal compounds which may be included. Any transition metal compound that may be used alone may also be used in conjunction with other transition metal compounds.

In one alternative embodiment of this invention, after the addition of the transition metal compound is completed, but before the removal of the non-polar solvent, at least one halogenated alkyl aluminum compound is added to the reaction slurry. The halogenated alkyl aluminum compound has the formula:

R_{y}³AlX_{(3-y)} (III)

where R³ is a C₁-C₁₀ alkyl group, preferably a C₁-C₅ alkyl group, more preferably a C₁-C₄ normal alkyl group and most preferably R³ is an ethyl group; X is Cl, Br or I, preferably Cl or Br and most preferably Cl; and y is 1 or 2. Most preferably in this embodiment, the halogenated alkyl aluminum compound is ethylaluminum dichloride (EADC) or diethylaluminum chloride (DEAC). The amount of the halogenated alkyl aluminum compound added to the reaction mixture is such that the Al:transition metal (derived from the transition metal compound) molar ratio in the catalyst composition is 0.1 to 10, preferably 0.5 to 5 and most preferably 1.0 to 2.0. It will be apparent to those skilled in the art that mixtures of the halogenated alkyl aluminum compounds may also be used in this step of the alternative embodiment of the catalyst synthesis process. The halogenated alkyl aluminum compounds are preferably added to the reaction slurry while it is stirred at 25°C to 65°C, preferably at 30° to 55°C, more preferably at 30° to 40°C and most preferably while the slurry is maintained under reflux conditions. Preferably in this embodiment, the amount of the halogenated alkyl aluminum compound used herein is not greater than that which can be deposited onto the carrier. Thus, in this embodiment, the exact molar ratio of Al:transition metal will vary (depending, e.g., on the carrier drying temperature), and must be determined on a case-by-case basis. The resulting catalyst precursor of this alternative embodiment is that of US-A-4,833,111. Accordingly, the catalyst precursor of this embodiment comprises, in addition to the remaining ingredients of the catalyst composition of this invention, at least one halogenated alkyl aluminum compound of formula (III), defined above.

In another alternative embodiment, the compound of formula (II) is a chlorinated alcohol, i.e., R" is a chlorinated C₂-C₁₀ alkyl group, preferably a chlorinated C₂-C₄ normal alkyl group, more preferably a chlorinated C₂-C₄ normal alkyl group and most preferably a chlorinated ethyl group. Preferably, in this alternative embodiment, the compound of formula (II) is 2,2,2-trichloroethanol. The term "chlorinated alcohol" as used herein designates a C₂-C₁₀ alcohol having at least one of its hydrogens on the second (beta) or higher carbon atom replaced by chlorine. Thus, alcohols having chlorine on the first (alpha) carbon atom of the alcohol are not suitable for use in this embodiment of the invention. Carbon atoms of the alcohol are named in a conventional manner by naming the carbon most distant from the hydroxyl group (OH) as the alpha carbon, with the next carbon being beta carbon, etc. Examples of suitable chlorinated alcohols are 2-chloroethanol, 2,2-dichloroethanol, 2,2,2-trichloroethanol, 2-chloro-propanol, 2,2-dichloro-propanol, 2,2,3-trichloro-propanol, 2,2,3,3-tetrachloro-propanol, 2-chloro-n-butanol, 2,3-dichloro-n-butanol, 2,3,4-trichloro-n-butanol, 2,3,4,4-tetrachloro-n-butanol, and 2,2,3,3,4,4-hexachloro-n-butanol.

The amount of the chlorinated alcohol used in this synthesis step of this alternative embodiment is preferably sufficient to convert substantially all of the magnesium alkyl (MgR or MgR') groups on the carrier to magnesium alkoxy (MgOR") or magnesium chloride (Mg-Cl) groups. Preferably, in this alternative embodiment, the amount of the chlorinated alcohol added is such that substantially no excess thereof is present in the non-polar solvent after substantially all of the magnesium alkyl groups are converted to the magnesium alkoxy or magnesium-chloride groups on the carrier to prevent the reaction of the chlorinated alcohol of formula (II) with the transition metal compound outside of the carrier. For example, for the silica heated at 200 to 850°C, the amount of the chlorinated alcohol of formula (II) used herein is 0.40 to 3.0 mmols of the chlorinated alcohol per gram of dried silica. This synthesis step is conducted at 25 to 65°C, preferably at 30 to 55°C, and most preferably at 30 to 40°C. The catalyst precursor of this alternative embodiment is that of US-A-4954470.

After the addition of the transition metal compound, or, in the alternative embodiment, of the halogenated alkyl aluminum compound is completed, the non-polar solvent may be slowly removed, e.g., by distillation or evaporation. The temperature at which the non-polar solvent is removed from the synthesis mixture affects the productivity of the resulting catalyst composition. Lower solvent removal temperatures produce catalyst compositions which are substantially more active than those produced with higher solvent removal temperatures. For this reason, it is preferred to remove the non-polar solvent at 40 to 65°C, preferably at 45 to 55°C and most preferably at 50°C by drying, distillation or evaporation or any other conventional means.

The resulting free-flowing powder of any of the embodiments described above, referred to herein as a catalyst precursor, is combined with dimethylaluminum chloride (DMAC), used as a catalyst activator. The combination of the herein-described precursor with the DMAC activator produces an activated alpha-olefin polymerization catalyst composition which polymerizes olefins, particularly alpha-olefins, to polymers believed to have substantially improved distribution of branches among the polymer molecules. The more uniform distribution of branches is manifested by the fact that the polymers made with the activated catalyst of this invention have crystalline melting points about 1-2°C lower than the polymers made with the same precursor but activated with trimethylaluminum. As is known to those skilled in the art, such a decrease in melting points indicates a substantially improved distribution of side chain branches among the polymer molecules. The activation of the precursor of this invention with DMAC also tends to decrease activity and sensitivity of the activated precursor to hydrogen, i.e., relatively higher concentrations of ethylene and hydrogen are required in the polymerization process to produce polymers with less catalyst residue and acceptable molecular weight, respectively, than those required in the polymerization of comparable polymers with the trimethylaluminum-activated precursors.

The DMAC activator preferably is used in an amount which is at least effective to promote the polymerization activity of the solid catalyst component of this invention. The amount of the DMAC activator may be sufficient to give an Al:transition metal molar ratio in the catalyst composition of 2 to 200, preferably 10 to 150, and most preferably 20 to 80.

Without wishing to be bound by any theory of operability, it is believed that the catalyst composition of this invention is produced by chemically impregnating the support with catalyst components sequentially added to the slurry of the carrier in the non-polar solvent. Therefore, all of the catalyst synthesis chemical ingredients (reagents) should preferably be soluble in the non-polar solvent used in the synthesis. The order of addition of the reagents may also be important since the catalyst synthesis procedure is predicated on the chemical reaction between the chemical ingredients sequentially added to the non-polar solvent (a liquid) and the solid carrier material or a catalyst intermediate supported by such a material (a solid). Thus, the reaction is a solid-liquid reaction. For example, it is desirable that the catalyst synthesis procedure is conducted in such a manner as to avoid the reaction of two or more reagents in the non-polar solvent to form a reaction product insoluble in the non-polar solvent outside of the solid catalyst support. Such an insoluble reaction product would be incapable of reacting with the carrier or the catalyst intermediate and therefore would not be incorporated onto the solid support of the catalyst composition.

The catalyst precursors of the present invention are preferably prepared in the substantial absence of water, oxygen, and other catalyst poisons. Such catalyst poisons can be excluded during the catalyst preparation steps by any well known methods, e.g., by carrying out the preparation under an atmosphere of nitrogen, argon or other inert gas. An inert gas purge can serve the dual purpose of excluding external contaminants during the preparation and removing undesirable reaction by-products resulting from the preparation of catalyst precursor. Purification of the non-polar solvent employed in the catalyst synthesis is also helpful in this regard.

The catalyst may be activated in situ by adding the DMAC activator and the precursor separately to the polymerization medium. It is also possible to combine the precursor and the activator before the introduction thereof into the polymerization medium, e.g., for up to 2 hours prior to the introduction thereof into the polymerization medium at a temperature of from -40 to 100°C.

### Polymerization

Alpha-olefins are polymerized with the catalysts prepared according to the present invention by any suitable process. Such processes include polymerizations carried out in suspension, in solution or in the gas phase. Gas phase polymerization reactions are preferred, e.g., those taking place in stirred bed reactors and, especially, fluidized bed reactors.

The molecular weight of the polymer may be controlled in a known manner, e.g., by using hydrogen. With the catalysts produced according to the present invention, molecular weight may be suitably controlled with hydrogen when the polymerization is carried out at relatively low temperatures, e.g., from 30 to 105°C. This control of molecular weight may be evidenced by a measurable change in melt index (I₂) of the polymer produced. The linear polyethylene polymers prepared in accordance with the present invention are homopolymers of ethylene or copolymers of ethylene with one or more C₃-C₁₀ alpha-olefins. Thus, copolymers having two monomeric units are possible as well as terpolymers having three monomeric units. Particular examples of such polymers include ethylene/propylene copolymers, ethylene/1-butene copolymers, ethylene/1-hexene copolymers, ethylene/1-octene copolymers, ethylene/4-methyl-1-pentene copolymers, ethylene/1-butene/1-hexene terpolymers, ethylene/propylene/1-hexene terpolymers and ethylene/propylene/1-butene terpolymers. When propylene is employed as a comonomer for copolymerization with ethylene, substantially more propylene is required to produce linear low density polyethylene polymer resins with required density for a particular application than 1-butene or higher olefins, used as comonomers, to produce comparable resins.

Ethylene/1-hexene is the most preferred copolymer.

The linear polyethylene polymers produced in accordance with the present invention preferably contain at least 80 percent by weight of ethylene units.

A particularly desirable method for producing linear low density polyethylene polymers according to the present invention is in a fluid bed reactor. Such a reactor and means for operating it are described in US-A-4,011,382, US-A-4,302,566 and US-A-4,481,301. The polymer produced in such a reactor contains the catalyst particles because the catalyst is not separated from the polymer.

The following examples further illustrate some features of the invention.

The properties of the polymers produced in the Examples and any calculated process parameters were determined in the following manner:

Density: ASTM D 1505--A plaque is made and conditioned for one hour at 100°C to approach equilibrium crystallinity. Measurement for density is then made in a density gradient column; reported as gms/cc.

Melt Index (MI), I₂: ASTM D-1238--Condition E--Measured at 190°C--reported as grams per 10 minutes.

High Load Melt Index (HLMI), I₂₁: ASTM D-1238 --Condition F - Measured at 10.5 times the weight used in the Melt Index test, above.

Melt Flow Ratio (MFR)=I₂₁/I₂

Crystalline Melting Point (Tₘ): Melting points of copolymers were measured by the Differential Scanning Calorimetry (DSC) method, at a heating rate of 2°C/min. Both unannealed and annealed samples were analyzed. Samples were annealed by heating the samples weighing about 10 mg to 150°C and cooling them to 40°C at a rate of 0.5°C/min.

Comonomer content: Comonomer contents of ethylene copolymers were measured by the infrared spectroscopic method, as described by T. E. Nowlin, Y. V. Kissin and K. P. Wagner, HIGH ACTIVITY ZIEGLER-NATTA CATALYST FOR THE PREPARATION OF ETHYLENE COPOLYMERS, Journal of Polymer Science: Part A: Polymer Chemistry, Volume 26, pages 755-764 (1988).

Crystallinity: Crystallinity of ethylene copolymers was measured by the DSC method, from the areas under the melting curves. The heat of melting for 100% crystalline polyethylene was chosen as 283 Joule/g.

### EXAMPLE 1

### (Catalyst Synthesis)

277 grams of Davison grade 955 silica, which had been heated to 600°C for about 16 hours under a dry nitrogen purge, was slurried in about 1500 milliters (mls) of dry hexane contained in a 3 liter round bottom flask kept under a continuous nitrogen purge and fitted with an overhead stirrer and a reflux condenser. The slurry was heated to and maintained at reflux, and 786 mls of dibutylmagnesium (DBM), 0.71 Molar solution in heptane, was added dropwise to the slurry (about 30 minutes) and the reflux continued for 90 minutes. Next, 57.8 mls of anhydrous ethanol diluted in about 300 mls of dry hexane was added dropwise to the slurry (about 30 minutes) and reflux continued for an additional hour. Finally, 34.0 mls of TiCl₄ diluted in about 250 mls of dry hexane was added dropwise, and the reflux was continued for an additional hour. The solvents were removed by distillation and dried at about 60°C to yield 492 grams (g) of a dry, free-flowing powder. The resulting catalyst precursor contained 1.70 mmols of Mg/gram of the precursor, 0.91 mmols of Ti/gram of the precursor, and 2.87 mmols of Cl/gram of the precursor.

### EXAMPLES 2-5

### (Polymerization Process)

The catalyst precursor of Example 1 was combined with triethylaluminum (TEAL), trimethylaluminum (TMA) or dimethylaluminum chloride (DMAC) catalyst activators to produce ethylene/1-hexene copolymers. Typical was the polymerization of Example 5, carried out in the manner summarized below with the catalyst of Example 1.

Polymerization conditions were controlled to produce ethylene/1-hexene copolymers containing about 4 to about 5% mole of 1-hexene. At about 40°C, and under a slow nitrogen purge, a 1.6 liter stainless steel autoclave, previously heated to about 70°C under a purge of dry nitrogen, was filled with 560 mls of dry hexane, 190 mls of dry 1-hexene and 10 mls of dimethylaluminum chloride (25 wt% in hexane). The reactor was closed, and hydrogen was introduced to raise the internal pressure to 40 psi (280 kPa). The contents of the reactor were stirred at 900 rpm and the temperature was increased to about 80°C.

The reactor was filled with ethylene to a total pressure of about 180 psi (1 psi = 7 kPa) and then 0.144 grams of Example 1 catalyst precursor, slurried in about 50 mls of hexane, was added to the reactor. The reactor temperature was adjusted to 85°C and the reactor pressure was maintained with ethylene.

The polymerization was continued for 50 minutes. 95 grams of polyethylene were obtained. The polymer contained 4.4 mole % of 1-hexene and it had the properties summarized in Table 1.

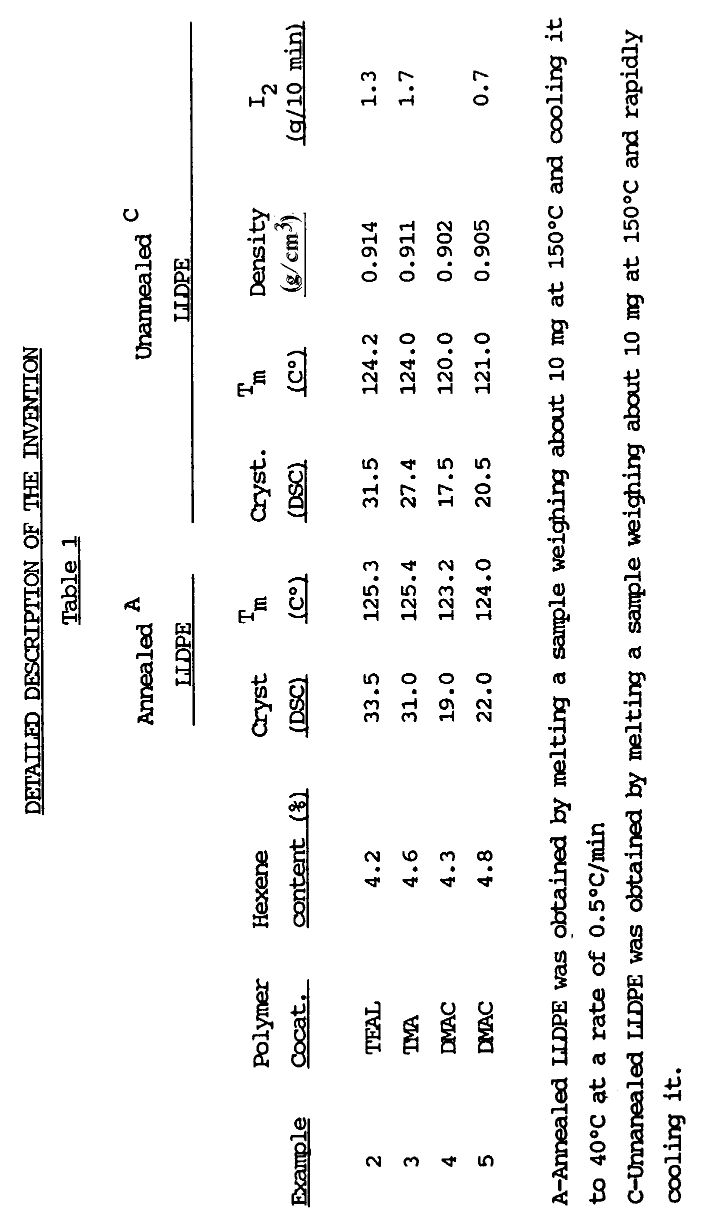

The data of Table 1 indicates that when the ethylene-hexene copolymers of equal composition are compared, the copolymers produced with the DMAC-activated precursor have significantly lower density, lower crystallinity, and lower melting points (both in the annealed and unannealed forms) than the copolymers produced with the TEAL- or TMAactivated precursors of Example 1. According to US-A-3,645,992, all these changes are indicative of a more homogeneous distribution of short chain branches among the polymer molecules in the copolymers produced with the DMAC- activated precursor.

The crystallizable component in any ethylene-olefin copolymer produced with a heterogeneous Ziegler-Natta catalyst (such as that of these Examples) can be separated into two fractions: a highly crystalline fraction (which determines the melting point of the copolymer) and a fraction of decreased crystallinity. DSC analysis of the average of the ethylene/1-hexene copolymers of Examples 2-5 provides a means for an approximate estimation of the relative contents of these fractions. This information is presented in Table 2.

**Table 2**

| (Data for unannealed samples) | | | |
|---|---|---|---|
| Cocatalyst | Cryst. phase | | Amorph. phase |
| | Crystallinity attributed to highly crystall. fraction | Crystallinity attributed to fraction of decreased cryst. | |
| TEAL | 11% | 21% | 68% |
| TMA | 10% | 18% | 72% |
| DMAC | 4% | 16% | 80% |

The data of Table 2 indicates that the copolymers produced with the catalyst of this invention have a lower fraction of highly crystalline material than the copolymers produced with the TEAL and TMA as catalyst activators, thereby indicating that the copolymers produced with the catalysts of this invention have an improved, more homogeneous branching distribution than the copolymers produced with the same precursors activated with TEAL or TMA.

### Examples 6-7

### (Polymerization Process

In Examples 6 and 7, the polymerization process was conducted in substantially the same manner as in Examples 2-5, but process conditions were adjusted to produce ethylene/1-hexene copolymers containing about 3.8 mole of 1-hexene. The results are summarized in Tables 3 and 4.

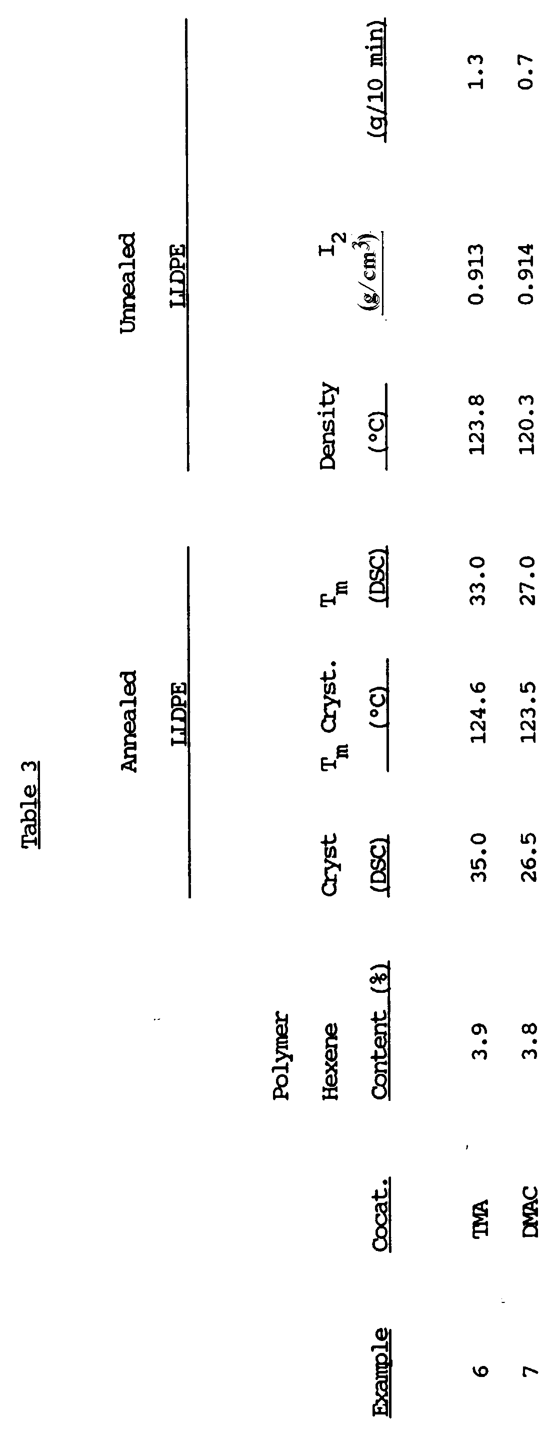

**Table 4**

| (Data for Annealed Samples) | | | | |
|---|---|---|---|---|
| Example | Cocatalyst | Cryst. phase | | Amorph. phase |
| | | Crystallinity attributed to highly crystall. fraction | Crystallinity attributed to fraction of decreased cryst. | |
| 6 | TMA | 13% | 22% | 65% |
| 7 | DMAC | 6% | 20% | 74% |

The data of Tables 2 and 4 indicates that LLDPE produced with the DMAC-activated catalyst not only has lower crystallinity (as shown in Tables 1 and 3), but its crystalline phase contains a lower fraction of a highly crystalline material. In addition, lower melting points of the copolymers produced with the DMAC-activated catalyst (Tables 1 and 3) indicate that these highly crystalline fractions have a more branched structure.

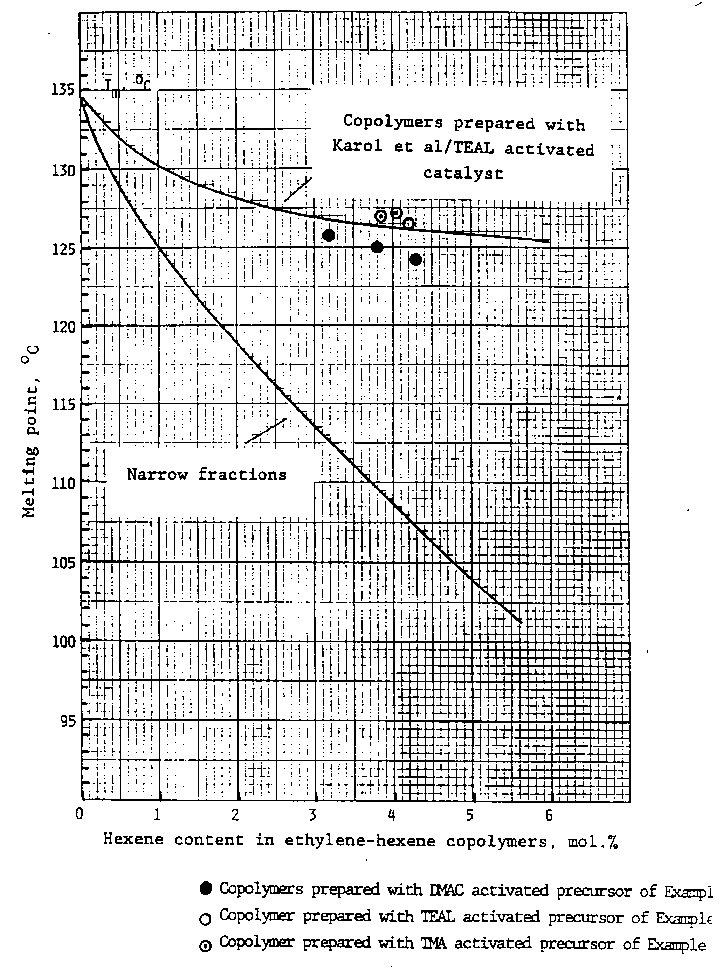

The comparative data of Examples 2-7, along with some additional similar data, was also analyzed graphically by plotting the values of Tₘ as a function of 1-hexene content in the copolymers, according to the teaching of US-A-3645992. The results are presented in Figure 1. The upper curve of Figure 1 is based on melting points of the resins considered to be a commercial standard, produced with a catalyst described in EP-A-0 120 503, Example 1(b), partially activated in accordance with Examples 2(b) or 2(c) thereof, and activated in the polymerization process with TEAL. The copolymers of the upper curve have a broad branching distribution, as indicated by insignificant changes in their crystalline melting points with the change in the 1-hexene content. The lower curve gives melting points of narrow copolymer fractions of the polymers of EP-A-0120503, which have very narrow branching distribution (substantially homogeneous copolymers). The fractionation was performed using the preparative TREF procedure (temperature-raising elution fractionation). The crystalline melting points of the copolymers of the lower curve decrease very rapidly with the increase in the 1-hexene content, as indicated by the slope of the curve. According to US-A-3,645,992, the branching distribution of a copolymer can be determined by measuring its crystalline melting point and its comonomer content. If the crystalline melting point of a copolymer with a given comonomer content is lower than the upper curve in the Figure, then such copolymer has an improved, more narrow (and therefore more homogeneous) branching distribution. Accordingly, the data points in Figure 1 for the copolymers made with the catalyst of this invention (activated with DMAC), indicate better compositional homogeneity of such copolymers than the copolymers of the upper curve. The data of Figure 1 also indicates that the TMA- and TEAL- activated precursor of Example 1 of this application produces polymers having substantially the same as or higher crystalline melting points than the polymers produced with the Karol et al TEAL- activated catalyst, a commercial standard.

It will be apparent to those skilled in the art that the specific embodiments discussed above can be successfully repeated with ingredients equivalent to those generically or specifically set forth above and under variable process conditions.

## Claims

1. A method of producing a supported olefin polymerization catalyst comprising the steps of:
(i) contacting a slurry of a solid, porous carrier and a non-polar solvent with at least one organomagnesium composition having the formula
Rₘ Mg R'ₙ (I)
where R and R' are the same or different C₄-C₁₂ alkyl groups, m and n are each 0, 1 or 2, provided that m + n is equal to the valence of Mg;
(ii) contacting the slurry of step (i) with at least one compound of the formula
R"-OH (II)
where R" is a C₁-C₁₀ alkyl group or a C₁-C₁₀ halogenated alkyl group;
(iii) contacting the slurry of step (ii) with at least one transition metal compound soluble in the non-polar solvent; and
(iv) combining the product of said step (iii) with dimethylaluminum chloride.

2. A method according to claim 1 wherein the solid, porous carrier is silica which, prior to contact thereof with the solvent in said step (i), is heated at a temperature of 100°C to 1000°C.

3. A method according to claim 2, wherein the silica is heated at a temperature of 600°C.

4. A method according to claim 2 or 3 wherein the silica has, after the heating, surface hydroxyl group concentration of 0.5 mmoles/g, a surface area of 300m²/gram and a pore volume of 1.65 m³/gram.

5. A method according to any preceding claim wherein the product of said step (iii), prior to conducting said step (iv), is dried at 40°C to 65°C to substantially remove the non-polar solvent.

6. A method according to any of claims 1 to 4 wherein the product of said step (iii), prior to conducting said step (iv), is dried at 45°C to 55°C.

7. A method according to any of claims 1 to 4 wherein the product of said step (iii), prior to conducting said step (iv), is dried at 50°C.

8. A method according to any preceding claim wherein in the said step (i) only such an amount of the organomagnesium composition is used which will be deposited onto the carrier; in said step (ii) only such an amount of the compound of the formula
(II) is used which is sufficient to convert substantially all of the magnesium alkyl groups on the carrier to magnesium alkoxy groups, so that substantially no excess of the formula (II) compound is present in the non-polar solvent after substantially all of the magnesium groups are converted to the magnesium alkoxy groups; and in said step (iii) such an amount of the transition metal compound is used which is not greater than that which can be deposited on the carrier.

9. A method according to any of claims 1 to 8 wherein after said step (iii) but before said step (iv), there is conducted the following step (iii a):
(iii a) contacting the slurry of said step (iii) with at least one halogenated alkyl aluminum compound of the formula
R³ _{y} Al X_{(3-y)} (III)
where R³ is a C₁-C₁₀ alkyl group, X is Cl, Br or I, and y is 1 or 2.

10. A method according to claim 9 wherein R³ is a C₁-C₄ alkyl group and X is Cl.

11. A method according to claim 9 or 10 wherein the compound of formula (III) is diethylaluminum chloride.

12. A method according to claim 9 or 10 wherein the compound of formula (III) is ethylaluminum dichloride.

13. A catalyst prepared according to any of claims 1 to 12 wherein the non-polar solvent is a hydrocarbon which is a liquid at ambient conditions.

14. A catalyst according to any of claims 1 to 13 wherein the amount of the transition metal compound present in said step (iii) is such that the molar ratio of Mg to the transition metal is 1 to 3.

15. A catalyst according to any of claims 1 to 13 wherein the amount of the transition metal compound present in said step (iii) is such that the molar ratio of Mg to the transition metal is 2 to 3.

16. A catalyst according to any of claims 1 to 13 wherein the amount of the transition metal compound present in said step (iii) is such that the molar ratio of Mg to the transition metal is 1.65 to 2.40.

17. A catalyst according to claim 16 wherein transition metal compound is TiCl₄ and the amount of the TiCl₄ present in said step (iii) is such that the molar ratio of Mg to Ti is 1 to 3.

18. A catalyst according to claim 17 wherein the amount of the TiCl₄ present in said step (iii) is such that the molar ratio of Mg to Ti is 2 to 3.

19. A catalyst according to claims 17 or 18 wherein the solid, porous carrier contains OH groups.

20. A catalyst according to claim 19 wherein the amount of the organomagnesium composition used in said step (i) is such that the molar ratio of Mg:OH is 1:1 to 6:1.

21. A catalyst according to claim 19 wherein the amount of the organomagnesium composition used in said step (i) is such that the molar ratio of Mg:OH is 2:1 to 4:1.

22. A catalyst according to claim 19 wherein the amount of the organomagensium composition used in said step (i) is such that the molar ratio of Mg:OH is 2.5:1 to 3.5:1.

23. A catalyst according to claim 19 wherein the amount of the organomagnesium composition used in said step (i) is such that the molar ratio of Mg:OH is 3:1.

24. A supported olefin polymerization catalyst prepared according to the process of claim 1 comprising at least one organomagnesium composition having the formula
RₘMgR'ₙ (I)
where R and R' are the same or different C₄-C₁₂ alkyl groups, m and n are each 0,1 or 2, providing that m+n is equal to the valence of Mg, at least one compound of the formula
R"-OH (II)
where R" is a C₁-C₁₀ alkyl group or a C₁-C₁₀ halogenated alkyl group, at least one transition metal compound, and dimethylaluminum chloride.

25. A catalyst according to claim 24 wherein R and R' are C₄-C₁₀ alkyl groups.

26. A catalyst according to claim 24 wherein R and R' are C₄-C₈ alkyl groups.

27. A catalyst according to claim 24 wherein R and R' are each butyl groups, m is 1 and n is 1.

28. A catalyst according to any of claims 24 to 27 wherein R" is a C₁-C₈ alkyl group.

29. A catalyst according to any of claims 24 to 27 wherein R" is a methyl, ethyl, propyl or butyl group.

30. A catalyst according to any of claims 24 to 27 wherein R" is a C₂-C₁₀ chlorinated alkyl group.

31. A catalyst according to any of claims 24 to 27 wherein R" is a C₂-C₈ chlorinated alkyl group.

32. A catalyst according to any of claims 24 to 27 wherein R" is a chlorinated ethyl, propyl or butyl group.

33. A catalyst according to any of claims 24 to 27 wherein R" is a 2,2,2-trichloroethyl group.

34. A catalyst according to any of claims 24 to 33 wherein the transition metal compound is a compound of titanium or vanadium.

35. A catalyst according to claim 34 wherein the transition metal compound is titanium halide.

36. A catalyst according to claim 35 wherein the titanium halide is titanium tetrahalide.

37. A catalyst according to claim 36 wherein the titanium tetrahalide is TiCl₄.

38. A process for polymerizing at least one olefin comprising contacting the olefin under olefin polymerization conditions with a catalyst according to any of claims 24 to 37.

39. A process according to claim 38 wherein the olefin is an alpha-olefin.

## Patentansprüche

1. Verfahren zum Herstellen eines Trägerkatalysators zur Olefinpolymerisation, das die folgenden Stufen umfaßt:
(i) Kontaktieren einer Aufschlämmung aus einem festen porösen Träger und einem unpolaren Lösungsmittel mit mindestens einer Magnesium-organischen Zusammensetzung der Formel
RₘMgR'ₙ (I),
worin R und R' gleiche oder verschiedene C₄-C₁₂-Alkylreste sowie m und n jeweils die Zahl 0, 1 oder 2 bedeuten, wobei m+n gleich der Wertigkeit von Mg ist;
(ii) Kontaktieren der Aufschlämmung der Stufe (i) mit mindestens einer Verbindung der Formel
R"-OH (II),
worin R" einen C₁-C₁₀-Alkylrest oder einen halogenierten C₁-C₁₀-Alkylrest bedeutet;
(iii) Kontaktieren der Aufschlämmung der Stufe (ii) mit mindestens einer Übergangsmetallverbindung, die in dem unpolaren Lösungsmittel löslich ist; und
(iv) Zusammenbringen des Produkts der Stufe (iii) mit Dimethylaluminiumchlorid.

2. Verfahren nach Anspruch 1, worin der feste poröse Träger Siliciumdioxid ist, das vor seinem Kontakt mit dem Lösungsmittel in der Stufe (i) auf eine Temperatur von 100°C bis 1000°C erhitzt wird.

3. Verfahren nach Anspruch 2, worin das Siliciumdioxid auf eine Temperatur von 600°C erhitzt wird.

4. Verfahren nach Anspruch 2 oder 3, worin das Siliciumdioxid nach dem Erhitzen eine Hydroxylgruppenkonzentration an der Oberfläche von 0,5 mmol/g, eine Oberfläche von 300 m²/Gramm und ein Porenvolumen von 1,65 m³/Gramm aufweist.

5. Verfahren nach einem der vorstehenden Ansprüche, worin das Produkt der Stufe (iii) vor der Durchführung der Stufe (iv) bei 40 bis 65°C getrocknet wird, um das unpolare Lösungsmittel im wesentlichen abzutrennen.

6. Verfahren nach einem der Ansprüche 1 bis 4, worin das Produkt der Stufe (iii) vor dem Durchführen der Stufe (iv) bei 45°C bis 55°C getrocknet wird.

7. Verfahren nach einem der Ansprüche 1 bis 4, worin das Produkt der Stufe (iii) vor dem Durchführen der Stufe (iv) bei 50°C getrocknet wird.

8. Verfahren nach einem der vorstehenden Ansprüche, worin in der Stufe (i) nur eine solche Menge der Magnesium-organischen Zusammensetzung verwendet wird, die auf dem Träger niedergeschlagen wird, in der Stufe (ii) nur eine solche Menge der Verbindung der Formel (II) eingesetzt wird, die ausreicht, um im wesentlichen alle Magnesiumalkylreste auf dem Träger in Magnesiumalkoxyreste umzuwandeln, so daß nach dem Umwandeln von im wesentlichen aller Magnesiumalkylreste in Magnesiumalkoxyreste in dem unpolaren Lösungsmittel im wesentlichen kein Überschuß der Verbindung der Formel (II) vorliegt, und in der Stufe (iii) eine Menge der Übergangsmetallverbindung eingesetzt wird, die nicht größer ist als jene, die auf dem Träger niedergeschlagen werden kann.

9. Verfahren nach einem der Ansprüche 1 bis 8, worin nach der Stufe (iii), aber vor der Stufe (iv), die folgende Stufe (iii a) durchgeführt wird:
(iii a) Kontaktieren der Aufschlämmung der Stufe (iii) mit mindestens einer halogenierten Alkylaluminiumverbindung der Formel
R³ _{y}AlX_{(3-y)} (III),
worin R³ einen C₁-C₁₀-Alkylrest darstellt, X die Bedeutung von Cl, Br oder I hat und y die Zahl 1 oder 2 ist.

10. Verfahren nach Anspruch 9, worin R³ einen C₁-C₄-Alkylrest darstellt und X die Bedeutung von Cl hat.

11. Verfahren nach Anspruch 9 oder 10, worin die Verbindung der Formel (III) Diethylaluminiumchlorid ist.

12. Verfahren nach Anspruch 9 oder 10, worin die Verbindung der Formel (III) Ethylaluminiumdichlorid ist.

13. Katalysator, hergestellt nach einem der Ansprüche 1 bis 12, worin das unpolare Lösungsmittel ein Kohlenwasserstoff ist, der bei Umgebungsbedingungen eine Flüssigkeit darstellt.

14. Katalysator nach einem der Ansprüche 1 bis 13, worin die Menge der Übergangsmetallverbindung, die in der Stufe (iii) vorliegt, derart bemessen ist, daß das Molverhältnis von Mg zu Übergangsmetall 1 : 3 beträgt.

15. Katalysator nach einem der Ansprüche 1 bis 13, worin die Menge der Übergangsmetallverbindung, die in der Stufe (iii) vorliegt, derart bemessen ist, daß das Molverhältnis von Mg zu Übergangsmetall 2 : 3 beträgt.

16. Katalysator nach einem der Ansprüche 1 bis 13, worin die Menge der Übergangsmetallverbindung, die in der Stufe (iii) vorliegt, derart bemessen ist, daß das Molverhältnis von Mg zu Übergangsmetall 1,65 : 2,40 beträgt.

17. Katalysator nach Anspruch 16, worin die Übergangsmetallverbindung TiCl₄ ist und die Menge des in der Stufe (iii) vorliegenden TiCl₄ derart bemessen ist, daß das Molverhältnis von Mg zu Ti 1 : 3 beträgt.

18. Katalysator nach Anspruch 17, worin die Menge des in der Stufe (iii) vorliegenden TiCl₄ derart bemessen ist, daß das Molverhältnis von Mg zu Ti 3 : 3 beträgt.

19. Katalysator nach Anspruch 17 oder 18, worin der feste poröse Träger OH-Gruppen enthält.

20. Katalysator nach Anspruch 19, worin die Menge der Magnesium-organischen Zusammensetzung, die in der Stufe (i) eingesetzt wird, derart bemessen ist, daß das Molverhältnis von Mg zu OH 1:1 bis 6:1 beträgt.

21. Katalysator nach Anspruch 19, worin die Menge der Magnesium-organischen Zusammensetzung, die in der Stufe (i) eingesetzt wird, derart bemessen ist, daß das Molverhältnis von Mg zu OH 2:1 bis 4:1 beträgt.

22. Katalysator nach Anspruch 19, worin die Menge der Magnesium-organischen Zusammensetzung, die in der Stufe (i) eingesetzt wird, derart bemessen ist, daß das Molverhältnis von Mg zu OH 2,5:1 bis 3,5:1 beträgt.

23. Katalysator nach Anspruch 19, worin die Menge der Magnesium-organischen Zusammensetzung, die in der Stufe (i) eingesetzt wird, derart bemessen ist, daß das Molverhältnis von Mg zu OH 3:1 beträgt.

24. Trägerkatalysator zur Olefinpolymerisation, hergestellt gemäß dem Verfahren nach Anspruch 1, enthaltend mindestens eine Magnesium-organische Zusammensetzung der Formel
RₘMgR'ₙ (I),
worin R und R' gleiche oder verschiedene C₄-C₁₂-Alkylreste sowie m und n jeweils die Zahl 0, 1 oder 2 bedeuten, wobei m+n gleich der Wertigkeit von Mg ist, mindestens eine Verbindung der Formel
R"-OH (II),
worin R" einen C₁-C₁₀-Alkylrest oder einen halogenierten C₁-C₁₀-Alkylrest bedeutet, mindestens eine Übergangsmetallverbindung sowie Dimethylaluminiumchlorid.

25. Katalysator nach Anspruch 24, worin R und R' jeweils einen C₄-C₁₀-Alkylrest bedeuten.

26. Katalysator nach Anspruch 24, worin R und R' jeweils einen C₄-C₈-Alkylrest bedeuten.

27. Katalysator nach Anspruch 24, worin R und R' jeweils eine Butylgruppe sowie m die Zahl 1 und n die Zahl 1 bedeuten.

28. Katalysator nach einem der Ansprüche 24 bis 27, worin R" einen C₁-C₈-Alkylrest bedeutet.

29. Katalysator nach einem der Ansprüche 24 bis 27, worin R" eine Methyl-, Ethyl-, Propyl- oder Butylgruppe bedeutet.

30. Katalysator nach einem der Ansprüche 24 bis 27, worin R" einen chlorierten C₂-C₁₀-Alkylrest bedeutet.

31. Katalysator nach einem der Ansprüche 24 bis 27, worin R" einen chlorierten C₂-C₈-Alkylrest bedeutet.

32. Katalysator nach einem der Ansprüche 24 bis 27, worin R" eine chlorierte Ethyl-, Propyl- oder Butylgruppe bedeutet.

33. Katalysator nach einem der Ansprüche 24 bis 27, worin R" den 2,2,2-Trichlorethylrest bedeutet.

34. Katalysator nach einem der Ansprüche 24 bis 33, worin die Übergangsmetallverbindung eine Titan- oder Vanadiumverbindung ist.

35. Katalysator nach Anspruch 34, worin die Übergangsmetallverbindung ein Titanhalogenid ist.

36. Katalysator nach Anspruch 35, worin das Titanhalogenid ein Titantetrahalogenid ist.

37. Katalysator nach Anspruch 36, worin das Titantetrahalogenid TiCl₄ ist.

38. Verfahren zum Polymerisieren mindestens eines Olefins, wobei das Verfahren das Kontaktieren des Olefins unter Bedingungen der Olefinpolymerisation mit einem Katalysator nach einem der Ansprüche 24 bis 37 umfaßt.

39. Verfahren nach Anspruch 38, worin das Olefin ein α-Olefin ist.

## Revendications

1. Procédé de préparation production d'un catalyseur supporté pour la polymérisation d'oléfines, comprenant les étapes de :
(i) mise en contact d'une bouillie d'un support poreux, solide et d'un solvant non polaire avec au moins une composition organomagnésienne de formule :
RₘMgR'ₙ (I)
dans laquelle R et R' sont des groupes alkyles en C₄₋₁₂ identiques ou différents, m et n sont chacun 0, 1 ou 2, à condition que la somme m + n soit égale à la valence de Mg;
(ii) mise en contact de la bouillie de l'étape (i) avec au moins un composé de formule :
R"-OH (II)
dans laquelle R" est un groupe alkyle en C₁₋₁₀ ou un groupe alkyle halogéné en C₁₋₁₀;
(iii) mise en contact de la bouillie de l'étape (ii) avec au moins un dérivé d'un métal de transition soluble dans le solvant non polaire; et
(iv) combinaison du produit de cette étape (iii) avec du chlorure de diméthyl aluminium.

2. Procédé suivant la revendication 1, dans lequel le support poreux solide est une silice qui, avant contact de celle-ci avec le solvant dans cette étape (i), est chauffée à une température comprise entre 100°C et 1000°C.

3. Procédé suivant la revendication 2, dans lequel la silice est chauffée à une température de 600°C.

4. Procédé suivant les revendications 2 ou 3, dans lequel la silice a, après le chauffage, une concentration en groupes hydroxy de surface de 0,5 mmole/g, une surface spécifique de 300 m²/g et un volume de pore de 1,65 m³/g.

5. Procédé suivant l'une quelconque des revendications précédentes, dans lequel le produit de ladite étape (iii), avant réalisation de ladite étape (iv), est séché à une température de 40°C à 65°C pour éliminer pratiquement le solvant non polaire.

6. Procédé suivant l'une quelconque des revendications 1 à 4, dans lequel le produit de ladite étape (iii), avant réalisation de ladite étape (iv), est séché à une température de 45°C à 55°C.

7. Procédé suivant l'une quelconque des revendications 1 à 4, dans lequel le produit de ladite étape (iii), avant réalisation de ladite étape (iv), est séché à 50°C.

8. Procédé suivant l'une quelconque des revendications précédentes, dans lequel dans ladite étape (i), il n'est utilisé que la quantité de la composition organomagnésienne qui sera déposée sur le support; dans ladite étape (ii), il n'est utilisé que la quantité du composé de formule (II) qui est suffisante pour convertir pratiquement la totalité des groupes alkyl magnésium sur le support en groupes alkoxy magnésium, pour qu'il ne reste pratiquement aucun excès du composé de formule (II) dans le solvant non polaire après conversion de pratiquement la totalité des groupes magnésium en groupes alkoxy magnésium; et dans ladite étape (iii), il est utilisé une quantité du dérivé de métal de transition qui ne dépasse pas celle qui peut être déposée sur le support.

9. Procédé suivant l'une quelconque des revendications 1 à 8, dans lequel, après ladite étape (iii), mais avant ladite étape (iv), on effectue l'étape (iii a) suivante :
(iii a) mise en contact de la bouillie de ladite étape (iii) avec au moins un composé alkylaluminium halogéné ayant la formule suivante :
R_{y}³AIX_{(3-y)} (III)
dans laquelle R³ est un groupe alkyle en C₁₋₁₀, X est un atome dc Cl, Br ou I, et y est est 1 ou 2.

10. Procédé suivant la revendication 9, dans lequel R³ est un groupe alkyle en C₁₋₄ et X est un atome de Cl.

11. Procédé suivant les revendications 9 ou 10, dans lequel le composé de formule (III) est le chlorure de diéthylaluminium.

12. Procédé suivant les revendications 9 ou 10, dans lequel le composé de formule (III) est le dichlorure d'éthylaluminium.

13. Catalyseur préparé suivant l'une quelconque des revendications 1 à 12. dans lequel le solvant non polaire est un hydrocarbure qui est un liquide dans les conditions ambiantes.

14. Catalyseur suivant l'une quelconque des revendications 1 à 13, dans lequel la quantité du dérivé de métal de transition présent dans ladite étape (iii) est telle que le rapport molaire de Mg au métal de transition est de 1 à 3.

15. Catalyseur suivant l'une quelconque des revendications 1 à 13, dans lequel la quantité du dérivé de métal de transition présent dans ladite étape (iii) est telle que le rapport molaire de Mg au métal de transition est de 2 à 3.

16. Catalyseur suivant l'une quelconque des revendications 1 à 13, dans lequel la quantité du dérivé de métal de transition présent dans ladite étape (iii) est telle que le rapport molaire de Mg au métal de transition est de 1,65 à 2,40.

17. Catalyseur suivant la revendication 16, dans lequel le dérivé de métal de transition est TiCl₄ et la quantité de TiCl₄ présent dans ladite étape (iii) est telle que le rapport molaire de Mg à Ti est de 1 à 3.

18. Catalyseur suivant la revendication 17, dans lequel la quantité de TiCl₄ présent dans ladite étape (iii) est telle que le rapport molaire de Mg à Ti est de 2 à 3.

19. Catalyseur suivant les revendications 17 ou 18, dans lequel le support poreux solide contient des groupes OH.

20. Catalyseur suivant la revendication 19, dans lequel la quantité de la composition organomagnésienne utilisée dans ladite étape (i) est telle que le rapport molaire de Mg:OH est de 1:1 à 6:1.

21. Catalyseur suivant la revendication 19, dans lequel la quantité de la composition organomagnésienne utilisée dans ladite étape (i) est telle que le rapport molaire de Mg:OH est de 2:1 à 4:1.

22. Catalyseur suivant la revendication 19, dans lequel la quantité de la composition organomagnésienne utilisée dans ladite étape (i) est telle que le rapport molaire de Mg:OH est de 2,5:1 à 3,5:1.

23. Catalyseur suivant la revendication 19, dans lequel la quantité de la composition organomagnésienne utilisée dans ladite étape (i) est telle que le rapport molaire de Mg:OH est de 3:1.

24. Catalyseur supporté pour la polymérisation d'oléfines préparé suivant le procédé de la revendication 1 comprenant au moins une composition organomagnésienne de formule :
RₘMgR'ₙ (I)
dans laquelle R et R' sont des groupes alkyles en C₄₋₁₂ identiques ou différents, m et n sont chacun 0, 1 ou 2, à condition que la somme m + n soit égale à la valence de Mg, au moins un composé de formule :
R"-OH (II)
dans laquelle R" est un groupe alkyle en C₁₋₁₀ ou un groupe alkyle halogéné en C₁₋₁₀, au moins un dérivé d'un métal de transition, et du chlorure de diméthylaluminium.

25. Catalyseur suivant la revendication 24, dans lequel R et R' sont des groupes alkyles en C₄₋₁₀.

26. Catalyseur suivant la revendication 24, dans lequel R et R' sont des groupes alkyles en C₄₋₈.

27. Catalyseur suivant la revendication 24, dans lequel R et R' sont chacun un groupe butyle, m est 1 et n est 1.

28. Catalyseur suivant l'une quelconque des revendications 24 à 27, dans lequel R" est un groupe alkyle en C₁₋₈.

29. Catalyseur suivant l'une quelconque des revendications 24 à 27, dans lequel R" est un groupe méthyle, éthyle, propyle ou butyle.

30. Catalyseur suivant l'une quelconque des revendications 24 à 27, dans lequel R" est un groupe alkyle chloré en C₂₋₁₀.

31. Catalyseur suivant l'une quelconque des revendications 24 à 27, dans lequel R" est un groupe alkyle chloré en C₂₋₈.

32. Catalyseur suivant l'une quelconque des revendications 24 à 27, dans lequel R" est un groupe éthyle, propyle ou butyle chloré.

33. Catalyseur suivant l'une quelconque des revendications 24 à 27, dans lequel R" est un groupe 2,2,2-trichloroéthyle.

34. Catalyseur suivant l'une quelconque des revendications 24 à 33, dans lequel le dérivé du métal de transition est un dérivé de titane ou de vanadium.

35. Catalyseur suivant la revendication 34, dans lequel le dérivé du métal de transition est un halogénure de titane.

36. Catalyseur suivant la revendication 35, dans lequel l'halogénure de titane est un tétrahalogénure de titane.

37. Catalyseur suivant la revendication 36, dans lequel le tétrahalogénure de titane est TiCl₄.

38. Procédé pour la polymérisation d'au moins une oléfine comprenant la mise en contact de l'oléfine dans des conditions de polymérisation d'oléfines avec un catalyseur suivant l'une quelconque des revendications 24 à 37.

39. Procédé suivant la revendication 38, dans lequel l'oléfine est une alpha-oléfine.
